# EUROPÄISCHE PATENTSCHRIFT

(11) **EP 2 550 800 B1**
(45) Veröffentlichungstag und Bekanntmachung des Hinweises auf die Patenterteilung: **17.06.2020**
(21) Anmeldenummer: 11708712.2
(22) Anmeldetag: 03.03.2011
(51) Int. Cl.: H04N 5/247, H04L 12/42, H04N 7/18, H04L 29/08, H04N 21/214

(54) **Überwachungssystem für Überwachung in einem Flugzeug**
Surveillance system for surveillance in an aircraft
Système de surveillance pour la surveillance dans un avion

(30) Priorität: 23.03.2010 DE 102010012591
(43) Veröffentlichungstag der Anmeldung: 30.01.2013
(73) Patentinhaber: Lufthansa Technik AG, 22335 Hamburg (DE)
(72) Erfinder: WENDE, Gerko, 20251 Hamburg (DE); NISS, Frank, 22453 Hamburg (DE)
(74) Vertreter: Müller Verweyen
(86) Internationale Anmeldenummer: PCT/EP2011/001056
(87) Internationale Veröffentlichungsnummer: WO 2011/116875

(56) Entgegenhaltungen:
- EP-A1- 0 754 991
- EP-A2- 1 458 191
- WO-A1-03/073705
- DE-A1- 19 502 114
- US-A1- 2003 200 546
- US-A1- 2003 217 363
- US-A1- 2007 206 906

## Beschreibung

Die Erfindung betrifft ein Überwachungssystem für Überwachung in einem Flugzeug nach dem Oberbegriff von Anspruch 1.

Eine Kameraeinheit für die Überwachung in einem Flugzeug ist beispielsweise aus der DE 10 2005 018 316 A1 bekannt. Kameraeinheiten werden beispielsweise in einem Überwachungssystem gemäß DE 101 48 054 A1 zur Überwachung einer Sicherheitszone zwischen der Passagierkabine und dem Cockpit eines Verkehrsflugzeugs verwendet.

Im Falle einer digitalen Kamera und Ausgabe von Bilddaten an ein digitales Datennetzwerk werden zusätzliche Netzwerkkomponenten zur Datenverteilung und zur Bereitstellung und Verwaltung entsprechender Netzwerkparameter, beispielsweise IP-Adressen, benötigt. Dies kann beispielsweise mittels eines separaten Ethernet-Switch geschehen, siehe US 2009 113494 A1. Zusätzliche aktive Netzwerkkomponenten benötigen jedoch einerseits Bauraum und eine zusätzliche Stromversorgung, und führen andererseits zu einem zusätzlichen Installations- und Konfigurationsaufwand. Weiterhin muss die individuelle Kennzeichnung einzelner Kameraeinheiten des Netzwerks durch entsprechende Hardware- und/oder Softwarekonfiguration manuell eingegeben werden, wodurch es insbesondere bei der Wartung eines solchen Systems zu fehlerhaften Zuordnungen der Kameraeinheiten in Bezug auf die jeweilige Einbauposition kommen kann.

US 2004 175123 A1 und EP 1 458 191 A2 offenbaren eine Netzwerkkamera mit einem integrierten Hub.

US 2006 268114 A1 offenbart eine Kamera, die frei von jeglichen eine direkte Verbindung der Kamera mit einem externen Computer gestattenden Schnittstellen ist. Die Kamera ist ausschließlich mit einem speziellen externen Download-Gerät verbindbar, das wiederum mit einem Computer verbunden sein kann. Die Kamera umfasst Mittel zum Bereitstellen eines Kamera-Identifikationscodes, beispielsweise in einem ROM-Speicher eines Signalprozessors, einem internen Speicher, einem nichtflüchtigen Speicher wie EEPROM oder Einmal-PROM oder einem entsprechenden ID-Hardware-Schaltkreis. Das Download-Gerät enthält Mittel zum Auslesen des Kamera-Identifikationscodes aus einer mit dem Download-Gerät verbundenen Kamera und zum Verifizieren des ausgelesenen Kamera-Identifikationscodes im Hinblick auf vorbestimmte Kriterien.

US 6 597 294 B1 offenbart ein Electronic Flight Bag (EFB) mit einem in einem Metallgehäuse angeordneten Computer, einem Tragarm, der an einem Ende in dem Metallgehäuse befestigt und an dessen anderem Ende ein mit dem Computer verbundener Bildschirm angeordnet ist, und einer geschlossen geschalteten Videokamera, die mit einem Interface des Computers verbunden ist, um beispielsweise die Cockpittür im Cockpit überwachen zu können.

WO 2007 086822 A2 und EP 1 632 903 A1 offenbaren weitere Überwachungssysteme für die Überwachung in einem Transportmittel.

DE 195 02 114 A1 offenbart eine mit einer Station verbundene Adapterschaltung zum Anschließen der Station an ein LAN-Netzwerk unter Vermeidung von Haupttaktkollisionen.

US 2003/200546 A1 offenbart ein Unterhaltungs- und Überwachungssystem nach dem Oberbegriff von Anspruch 1, mit Kameras, die durch ein Verteilernetzwerk mit einem Bildschirm für den Piloten verbunden sind, sowie mit einer Steuereinheit, mit der die einzelnen Kameras von dem Piloten individuell angesteuert werden können.

WO 03/073705 A1 offenbart eine optische Ring-Architektur für ein faseroptisches Kommunikationsnetzwerk in einem Flugzeug.

Die Aufgabe der Erfindung besteht darin, ein Überwachungssystem bereitzustellen, das eine Reduzierung des insgesamt erforderlichen Bauraums und Installations- und Konfigurationsaufwands erreicht sowie vorzugsweise eine einfache und schnelle Installation und Wartung ermöglicht.

Die Erfindung löst diese Aufgabe mit den Mitteln des unabhängigen Anspruchs 1. Aufgrund der Integration einer aktiven Netzwerkkomponente zur Datenverteilung, vorzugsweise eines Switch, in die Kameraeinheit können entsprechende separate Netzwerkkomponenten vermieden werden. Die von der aktiven Netzwerkkomponente ausgeübten Funktionen, insbesondere Datenverteilung, vorzugsweise auch Bereitstellung und Verwaltung entsprechender Netzwerkparameter, können im Wesentlichen ohne zusätzlichen Bauraum und ohne zusätzliche Stromversorgung in der erfindungsgemäß eingerichteten Kameraeinheit durchgeführt werden.

Erfindungsgemäß ist die Steuereinrichtung zum Ermitteln einer individuellen Kennzeichnung aus einem am Einbauort der Kameraeinheit vorgesehenen, einbauseitigen Kennzeichnungsmittel eingerichtet. Am Einbauort bedeutet, dass das einer Kameraeinheit zugeordnete Kennzeichnungsmittel in unmittelbarer räumlicher Beziehung zu dieser Kameraeinheit steht bzw. dezentral angeordnet ist. Des Weiteren besteht eine Mess- bzw. Wirkverbindung zwischen dem Kennzeichnungsmittel und der Kameraeinheit, die es der Steuereinrichtung gestattet, die Kennzeichnung aus dem Kennzeichnungsmittel auszulesen bzw. zu ermitteln. Die Kennzeichnung kann insbesondere Information bezüglich der Einbauposition der Kameraanordnung enthalten. Auf diese Weise ist nach der Installation des Kennzeichnungsmittels am Einbauort jederzeit die Positionsinformation am Einbauort verfügbar und kann von der Steuereinrichtung nach dem Einbau einer Kameraeinheit an diesem Einbauort ohne jegliche individuelle Konfiguration oder Programmierung automatisch ermittelt werden.

Aus der Kennzeichnung kann erfindungsgemäß ein die Kameraeinheit spezifizierender Netzwerkparameter, insbesondere eine IP-Adresse, ermittelt werden. Eine fehleranfällige manuelle Zuweisung einer Kennzeichnung oder eines Netzwerkparameters nach dem Einbau oder Austausch einer Kameraeinheit, beispielsweise nach einem Defekt in einer Kameraeinheit, ist daher nicht mehr erforderlich. Installation und Wartung von Kameraeinheiten werden dadurch erheblich erleichtert und beschleunigt.

Das Kennzeichnungsmittel ist erfindungsgemäß in einem mit der jeweiligen Kameraeinheit zu verbindenden elektrischen Steckmittel gebildet, vorzugsweise in Form einer individuellen Kodierung von Kontaktelementen, beispielsweise Kontaktstiften, des Steckmittels. Außer den für die Kennzeichnung verwendeten Kontaktelementen sind dann im Wesentlichen keine weiteren Mittel erforderlich. Das Kennzeichnungsmittel ist aber nicht auf eine Kodierung von Kontaktelementen eines einbauseitigen Steckmittels beschränkt. Das Kennzeichnungsmittel kann beispielsweise auch ein Transponder oder ein anderes elektrisch oder mechanisch kodiertes, vorzugsweise passives Element sein.

Vorzugsweise umfasst die Kameraeinheit eine Mehrzahl von Netzwerkschnittstellen, weiter vorzugsweise mindestens drei Netzwerkschnittstellen. Damit lassen sich in einem Überwachungssystem verschiedene zweckmäßige Netzwerktopologien, gegebenenfalls mit weiteren Kameraeinheiten beispielsweise für andere Kabinenbereiche oder die Frachträume, realisieren.

Die Erfindung betrifft ein Überwachungssystem für Überwachung in einem Flugzeug, insbesondere zur Cockpittür-Überwachung in einem Passagierflugzeug, umfassend eine erfindungsgemäße Kameraeinheit und mindestens eine mit der Kameraeinheit über eine Netzwerkverbindung verbundene Bildschirmvorrichtung zur Anzeige mit der Kameraeinheit aufgenommener Bilder. Vorzugsweise ist dann die mindestens eine Bildschirmvorrichtung von einem Electronic Flight Bag (EFB) gebildet. Durch die Nutzung des in dem EFB ohnehin vorgesehenen Bildschirms kann auf einen zusätzlichen Bildschirm für das Überwachungssystem verzichtet werden, was erheblichen zusätzlichen Aufwand und Bauraum im Cockpit spart.

Vorzugsweise ist eine Mehrzahl von Bildschirmvorrichtungen vorgesehen. Die mindestens eine Kameraeinheit und die Mehrzahl von Bildschirmvorrichtungen können vorteilhafterweise mittels einer ringförmigen Netzwerkstruktur miteinander verbunden sein. Hierdurch kann insbesondere eine Redundanz erzeugt werden, um bei einem einfachen Fehler des Netzwerks dennoch einen weitgehend uneingeschränkten Betrieb des Überwachungssystems zu ermöglichen.

Die Erfindung wird im Folgenden anhand vorteilhafter Ausführungsformen unter Bezugnahme auf die beigefügten Figuren erläutert. Dabei zeigt:
- Fig. 1:: ein Überwachungssystem insbesondere zur Überwachung in einem Transportmittel;
- Fig. 2:: eine schematische Darstellung einer Kameraeinheit für ein Überwachungssystem; und
- Fig. 3:: ein Überwachungssystem zur Überwachung einer Cockpittür in einem Passagierflugzeug.

Das Überwachungssystem 11 wird im Folgenden anhand einer bevorzugten Anwendung zur Überwachung insbesondere der Cockpittür in einem Passagierflugzeug 10 erläutert. Die Erfindung lässt sich ohne Weiteres auf die Überwachung in anderen Transportmitteln umfassend Flugzeuge, Schiffe, Schienenfahrzeuge und Kraftfahrzeuge übertragen. Weitere Anwendungen sind denkbar, beispielsweise Überwachung von Geländen, Anlagen und Gebäuden.

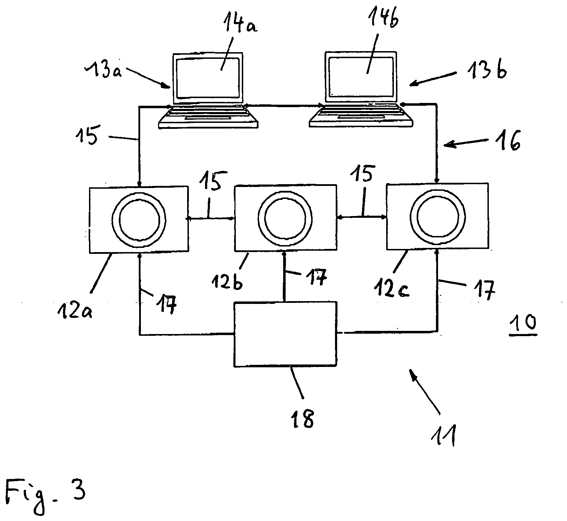

Das Überwachungssystem 11 umfasst mindestens eine digitale Kameraeinheit 12a und eine Bildschirmvorrichtung 13a, die mit der Kameraeinheit über eine digitale Datenleitung 15 verbunden ist und einen Bildschirm 14a zur Wiedergabe von der Kameraeinheit 12a aufgezeichneter Bilder aufweist, siehe Figur 3. Die mindestens eine Kameraeinheit 12a und die mindestens eine Bildschirmvorrichtung 13a sind Teil eines digitalen Datennetzwerks 16, insbesondere eines Ethernet-Netzwerks. Die Bildschirmvorrichtung 13a wird vorteilhafterweise von einem Electronic Flight Bag (EFB) im Cockpit gebildet, so dass auf einen herkömmlichen separaten Bildschirm für das Überwachungssystem 11 verzichtet werden kann.

Um eine umfassende Überwachung insbesondere des Raums vor der Cockpittür zu ermöglichen, umfasst das Überwachungssystem 11 vorzugsweise eine Mehrzahl von mindestens zwei, vorzugsweise mindestens drei Kameraeinheiten 12a, 12b, 12c, die zweckmäßigerweise untereinander und mit der mindestens einen Bildschirmvorrichtung 13a über digitale Datenleitungen 15 insbesondere seriell verbunden sind.

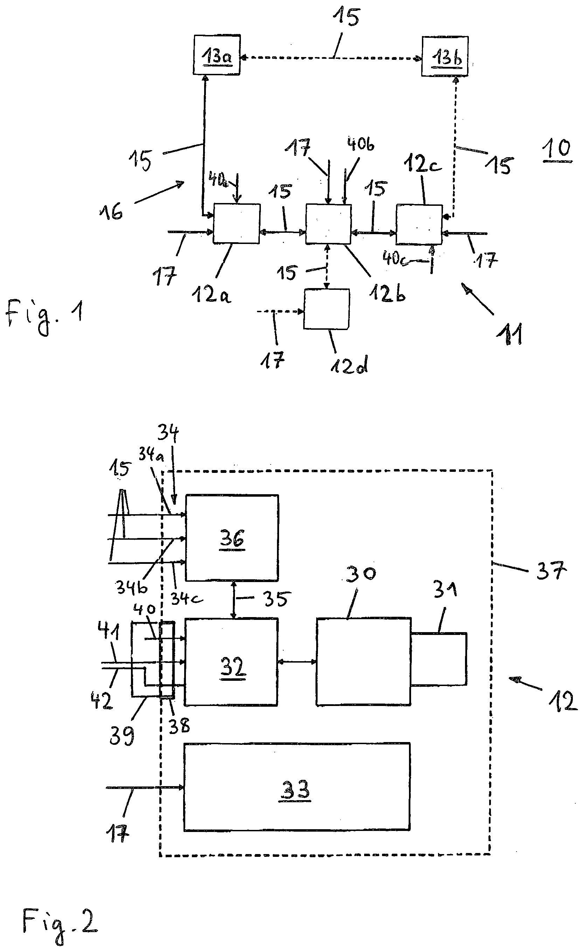

Das Überwachungssystem 11 umfasst vorzugsweise eine Mehrzahl von Bildschirmvorrichtungen 13a, 13b mit entsprechenden Bildschirmen 14a, 14b, um mehreren Personen, beispielsweise Pilot und Copilot, unabhängig voneinander die Inspektion der von der mindestens einen Kameraeinheit 12a, 12b, 12c aufgenommenen Bilder zu ermöglichen. Die Bildschirmvorrichtungen 13a, 13b und die Kameraeinheiten 12a, 12b, 12c sind vorzugsweise mittels Datenleitungen 15 in einer ringförmigen Netzwerkanordnung 16 verbunden, wie in den Figuren 1 und 3 gezeigt ist. Aufgrund der dadurch erzeugten Redundanz kann bei einem einfachen Fehler in dem Netzwerk 16 dennoch ein weitgehend uneingeschränkter Betrieb des Überwachungssystems 11 aufrechterhalten werden. Das Netzwerk 16 kann auch Verzweigungen aufweisen, beispielsweise in Figur 1 zum Anschluss einer weiteren Kameraeinheit 12d.

Eine Kameraeinheit 12 ist in Figur 2 genauer dargestellt und umfasst eine Kamera 30 mit einem Objektiv 31, eine Prozessoreinheit 32 zur Steuerung der Kamera 30 und Verarbeitung der mit der Kamera 30 aufgenommenen Bilddaten, eine interne Stromversorgungseinrichtung 33, die von einer Versorgungsleitung 17 mit einer Versorgungsspannung aus einer Spannungsquelle 18 (siehe Fig. 3) gespeist wird, mindestens eine digitale Datenschnittstelle 34 zum Ausgeben der mit der Kameraeinheit 12 aufgezeichneten Bilddaten an das Datennetz und ein Gehäuse 37. Vorzugsweise sind im Hinblick auf das bevorzugte ringförmige Netzwerk 16 mindestens zwei Datenschnittstellen 34a, 34b vorgesehen. Mindestens eine weitere Datenschnittstelle 34c kann zum Anschluss einer weiteren Kameraeinheit 12d vorgesehen sein. Im allgemeinen lassen sich mit mindestens drei Datenschnittstellen 34a, 34b, 34c unterschiedliche Netzwerkstrukturen (Ring, Stern, Baum und/oder Kombinationen daraus, etc.) realisieren.

Die Verteilung des Datenverkehrs zwischen den Netzwerkschnittstellen 34a, 34b, 34c und der internen Datenschnittstelle 35 wird vorzugsweise mittels eines in der Kameraeinheit 12 angeordneten Switch 36, insbesondere eines Ethernet-Switch, gesteuert, der zweckmäßigerweise von der Stromversorgungseinrichtung 33 versorgt wird. Auf zusätzliche Netzwerkkomponenten zur Datenverteilung in dem Überwachungssystem 11 kann daher vorteilhafterweise verzichtet werden. Ethernet-Switches sind insbesondere als Single-Chip-Komponenten in verschiedenen Bauformen erhältlich.

Die Kameraeinheit 12 umfasst eine elektrische Steckverbindung mit einem kameraseitigen Steckmittel 38, beispielsweise einer Steckbuchse, und einem damit zusammenwirkenden einbauseitigen Steckmittel 39, beispielsweise einem Stecker. Das einbauseitige Steckmittel 39 ist nicht Teil der Kameraeinheit 12, sondern des in dem Flugzeug fest installierten Teils des Überwachungssystems 11. Das einbauseitige Steckmittel 39 umfasst insbesondere ein Kennzeichnungsmittel 40, das im Folgenden erläutert wird. Die Steckverbindung 38, 39 kann weiterhin zur Verbindung der Datenleitungen 15, der Versorgungsleitung 17 und/oder gegebenenfalls weiterer Leitungen, beispielsweise einer zusätzlichen Eingangsleitung 41 und einer zusätzlichen Ausgangsleitung 42, mit der Kameraeinheit 12 dienen.

Das Kennzeichnungsmittel 40 dient zur Kodierung einer eindeutigen Kennzeichnung, die insbesondere den Einbauort der jeweiligen Kameraeinheit 12a, 12b, 12c in dem Überwachungssystem definiert. Genauer gesagt erhält jede Kameraeinheit 12a, 12b, 12c eine individuelle Kennzeichnung durch individuelle Zuordnung eines entsprechenden Kennzeichnungsmittels 40a, 40b, 40c mit einer individuellen Kennzeichnung. Wenn das Steckmittel 38 einer Kameraeinheit 12 mit dem einbauseitigen Steckmittel 39 verbunden ist, kann die in dem Kennzeichnungsmittel 40 enthaltene Kennung von der Prozessoreinheit 32 ausgelesen und daraus der Einbauort und/oder Netzwerkparameter, insbesondere eine IP-Adresse der Kameraeinheit 12, ermittelt werden. Eine manuelle Zuweisung von Netzwerkparametern bzw. einer IP-Adresse zu der Kameraeinheit 12 ist daher nicht erforderlich. Allein durch Verbinden des Steckmittels 38 mit dem Steckmittel 39 wird über das Kenzeichnungsmittel 40 die Information über den Einbauort der Kameraeinheit 12 automatisch bereitgestellt, eine fehlerhafte Zuordnung einer Kameraeinheit 12a, 12b, 12c in dem mindestens einen Terminal 13a, 13b ist daher praktisch ausgeschlossen.

Das Kennzeichnungsmittel 40 wird vorzugsweise durch Kodierung von Kontaktelementen, insbesondere Kontaktstiften, in dem Steckmittel 39 realisiert. Dabei kann eine Kodierung auf einfache Weise dadurch erfolgen, dass an die zur Kodierung vorgesehenen Kontaktstifte beispielsweise entweder eine vordefinierte Spannung oder Masse angelegt wird. Wenn das Kennzeichnungsmittel 40 beispielsweise vier Kontaktstifte zur Kodierung der Kennzeichnung umfasst, können auf diese Weise sechzehn individuelle Kennzeichnungen kodiert werden. Selbstverständlich kann eine Kodierung individueller Kennzeichnungen auch auf andere geeignete Weise erreicht werden.

## Patentansprüche

1. Überwachungssystem (11) für Überwachung in einem Flugzeug (10), umfassend mindestens eine Kameraeinheit (12a, 12b, 12c) umfassend eine digitale Kamera (30), eine elektronische Steuereinrichtung (32) zum Steuern und Auslesen der Kamera (30), eine Schnittstelle (34) zur Ausgabe von Bilddaten an ein digitales Datennetzwerk (16) und eine aktive Netzwerkkomponente (36) zur Datenverteilung, und mindestens eine mit der Kameraeinheit (12a, 12b, 12c) über eine Datenleitung (15) verbundene Bildschirmvorrichtung (13a, 13b) zur Wiedergabe mit der Kameraeinheit (12a, 12b, 12c) aufgenommener Bilder, **dadurch gekennzeichnet, dass** an einem Einbauort jeder Kameraeinheit (12a, 12b, 12c) einbauseitig ein eine individuelle Kennzeichnung definierendes Kennzeichnungsmittel (40) vorgesehen ist, wobei das Kennzeichnungsmittel (40) in einem mit der jeweiligen Kameraeinheit (12a, 12b, 12c) zu verbindenden elektrischen Steckmittel (39) gebildet ist, wobei das einbauseitige Steckmittel (39) Teil eines in einem Flugzeug (10) fest zu installierenden Teils des Überwachungssystems (11) ist, und die Steuereinrichtung (32) zum Ermitteln einer individuellen Kennzeichnung aus dem am Einbauort der Kameraeinheit (12) vorgesehenen einbauseitigen Kennzeichnungsmittel (40) und zum Ermitteln mindestens eines Netzwerkparameters aus der Kennzeichnung eingerichtet ist.

2. Überwachungssystem nach Anspruch 1, **dadurch gekennzeichnet, dass** die aktive Netzwerkkomponente (36) ein Switch ist.

3. Überwachungssystem nach einem der vorangehenden Ansprüche, **dadurch gekennzeichnet, dass** die Kameraeinheit (12a, 12b, 12c) eine Mehrzahl von Netzwerkschnittstellen (34a, 34b, 34c) umfasst.

4. Überwachungssystem nach einem der vorangehenden Ansprüche, **dadurch gekennzeichnet, dass** die Kennzeichnung durch eine individuelle Kodierung von Kontaktelementen in dem einbauseitigen elektrischen Steckmittel (39) gebildet ist.

5. Überwachungssystem nach einem der vorangehenden Ansprüche zur Cockpittür-Überwachung in einem Passagierflugzeug (10) .

6. Überwachungssystem nach Anspruch 5, **dadurch gekennzeichnet, dass** die mindestens eine Bildschirmvorrichtung (13a, 13b) von einem Electronic Flight Bag (EFB) gebildet ist.

7. Überwachungssystem nach einem der vorangehenden Ansprüche, umfassend eine Mehrzahl von Bildschirmvorrichtungen (13a, 13b) .

8. Überwachungssystem nach Anspruch 7, **dadurch gekennzeichnet, dass** die mindestens eine Kameraeinheit (12a, 12b, 12c) und die Mehrzahl von Bildschirmvorrichtungen (13a, 13b) mittels eines ringförmigen Datennetzwerks (16) miteinander verbunden sind.

9. Passagierflugzeug (10), umfassend ein Überwachungssystem (11) nach einem der vorangehenden Ansprüche.

## Claims

1. Surveillance system (11) for surveillance in an aircraft (10), including at least one camera unit (12a, 12b, 12c) including a digital camera (30), an electronic control device (32) for controlling and reading out the camera (30), an interface (34) for outputting image data to a digital data network (16), and an active network component (36) for data distribution, and at least one monitor device (13a, 13b) which is connected to the camera unit (12a, 12b, 12c) via a data line (15) for displaying images recorded by the camera unit (12a, 12b, 12c) **characterized in that** at a mounting side of each camera unit (12a, 12b, 12c) on the installation side an identification means (40) is provided which defines an individual identification, wherein a plug means (39) at the mounting side includes the identification means (40) which works together with the respective camera unit (12a, 12b, 12c), wherein the plug means (39) on the installation side is part of the surveillance system 11, which is fixedly installable in an aircraft (10), and the control device (32) is adapted to determine an individual identification from an identification means (40) on the installation side which is provided at the mounting side of the camera unit (12), and to determine at least one network parameter from the identification.

2. Surveillance system (11) according to claim 1, **characterized in that** the active network component (36) is a switch.

3. Surveillance system (11) according to any one of the preceding claims, **characterized in that** the camera unit (12a, 12b, 12c) includes a plurality of network interfaces (34a, 34b, 34c).

4. Surveillance system according to any one of the preceding claims, **characterized in that** the identification is formed by an individual coding of contact elements in the electric plug means (39) at the mounting side.

5. Surveillance system according to any one of the preceding claims for cockpit door surveillance in a passenger aircraft (10).

6. Surveillance system according to claim 5, **characterized in that** the at least one monitor device (13a, 13b) is formed by an Electronic Flight Bag (EFB).

7. Surveillance system according to any one of the preceding claims, including a plurality of monitor devices (13a, 13b) .

8. Surveillance system according to claim 7, **characterized in that** the at least one camera unit (12a, 12b, 12c) and the plurality of monitor devices (13a, 13b) are connected to each other via a ring type data network (16).

9. Passenger aircraft (10), including a surveillance system (11) according to any one of the preceding claims.

## Revendications

1. Système de surveillance (11) pour la surveillance dans un avion (10), comprenant au moins une unité de caméra (12a, 12b, 12c) comprenant une caméra numérique (30), un organe de commande (32) électronique pour la commande et la lecture de la caméra (30), une interface (34) pour la sortie de données d'image vers un réseau de données (16) numériques et un composant actif de réseau (36) pour la distribution des données, et au moins un dispositif à écran (13a, 13b) relié à l'unité de caméra (12a, 12b, 12c) par une ligne de données (15) pour afficher les images enregistrées avec l'unité de caméra (12a, 12b, 12c), **caractérisé en ce qu'**à un emplacement d'installation de chaque unité de caméra (12a, 12b, 12c), un moyen d'identification (40) définissant une identification individuelle est prévu côté installation, le moyen d'identification (40) étant formé dans un moyen d'enfichage (39) électrique à connecter à l'unité de caméra (12a, 12b, 12c) respective, le moyen d'enfichage (39) côté installation faisant partie d'une partie du système de surveillance (11) à installer de manière permanente dans un avion (10), et l'organe de commande (32) étant conçu pour déterminer une identification individuelle à partir du moyen d'identification (40) côté installation prévu à l'emplacement d'installation de l'unité de caméra (12) et pour déterminer au moins un paramètre de réseau à partir de l'identification.

2. Système de surveillance selon la revendication 1, **caractérisé en ce que** le composant actif de réseau (36) est un commutateur.

3. Système de surveillance selon l'une des revendications précédentes, **caractérisé en ce que** l'unité de caméra (12a, 12b, 12c) comprend une pluralité d'interfaces de réseau (34a, 34b, 34c).

4. Système de surveillance selon l'une des revendications précédentes, **caractérisé en ce que** l'identification est formée par un codage individuel d'éléments de contact dans le moyen d'enfichage (39) électrique côté installation.

5. Système de surveillance selon l'une des revendications précédentes pour la surveillance de la porte de cockpit dans un avion de passagers (10).

6. Système de surveillance selon la revendication 5, **caractérisé en ce que** ledit au moins un dispositif à écran (13a, 13b) est formé par une sacoche de vol électronique (EFB).

7. Système de surveillance selon l'une des revendications précédentes, comprenant une pluralité de dispositifs à écran (13a, 13b).

8. Système de surveillance selon la revendication 7, **caractérisé en ce que** ladite au moins une unité de caméra (12a, 12b, 12c) et la pluralité de dispositifs à écran (13a, 13b) sont connectées les uns aux autres au moyen d'un réseau de données (16) en anneau.

9. Avion de passagers (10), comprenant un système de surveillance (11) selon l'une des revendications précédentes.
